# EUROPEAN PATENT SPECIFICATION

(11) **EP 2 028 852 B1**
(45) Date of publication and mention of the grant of the patent: **22.05.2013**
(21) Application number: 08162706.9
(22) Date of filing: 20.08.2008
(51) Int. Cl.: H04N 5/50, H04N 21/434

(54) **Method of generating channel table according to user preferences in relation to broadcasting stations**
Verfahren zur Erzeugung einer Kanaltabelle gemäß den Benutzereinstellungen in Bezug auf Rundfunkstationen
Procédé de génération d'un tableau de chaînes selon les préférences d'utilisateur associées aux stations de diffusion

(30) Priority: 21.08.2007 TR 200705792
(43) Date of publication of application: 25.02.2009
(73) Proprietor: Vestel Elektronik Sanayi ve Ticaret A.S., 45030 Manisa (TR)
(72) Inventor: Yuksel, Ulas, 45030 Manisa (TR)
(74) Representative: Cayli, Hülya

(56) References cited:
- EP-A2- 0 666 691
- EP-A2- 0 800 313
- GB-A- 2 258 573
- DATABASE WPI Week 200770 Thomson Scientific, London, GB; AN 2007-748217 XP002565255 & KR 2007 013 702 A (SAMSUNG ELECTRONICS CO LTD) 31 January 2007 (2007-01-31)

## Description

### Technical Field

The present invention relates to a method, which provides the identification of those broadcasting stations available in the television and/or radio broadcast frequency spectrum but are not desired by the user, and the prevention of storing such broadcasting stations onto the program channel table.

### Prior Art

Many methods have been developed for preventing the storage of unwanted broadcasting stations, i.e. broadcasting stations not preferable by the user, among many of those which emerge increasingly day by day in televisions and/or radios broadcasting frequency spectra, on electronic devices channel tables. The main of such methods are known as the "parent control" and "channel storage according to user preference".

The parent controls employed in existing electronic devices do operate based on 2 separate methods. The main of such methods is based on restricting the access to certain program numbers by means of password or passwords assigned by the user.

The basic problem here is the incapability of avoiding the storage of a broadcasting station assigned to an already-restricted program number to another program number, since any such unwanted broadcasting station already exists in the current program channel table and since the restriction is brought here to a program number, but not to the broadcasting station itself, this case emerging, for instance, when the frequency value of another program number is changed or the present program channel table is updated.

On the other hand, if the restriction is brought not to the program number, but to the broadcasting frequency of a broadcasting station assigned to an unwanted or already-restricted program number, it becomes possible to store a broadcasting station -which is assumed to be restricted- on the program channel table in a freely-accessible manner, when the broadcasting frequency of such broadcasting station is changed.

Another method for parent control is based on restricting the storage onto the program channel table of those broadcasting stations with codes indicating the general content of a broadcasting station of broadcasting stations. This method is known as "channel skipping" as well.

According to this method, it is indicated by the user as to which code(s) defining the general content of such broadcasting stations is/are not wanted. The content codes in broadcasting signals detected during the scanning of the relevant frequency spectrum for storing the available broadcasting stations onto the program channel table are checked, and if a code with an unwanted broadcast content -as determined by the user- is identified, this broadcasting station is not stored onto the program channel table.

The basic problem in this method is that the broadcasting stations are subjected to a general evaluation. However, in the case in which the user wants to store a certain broadcasting station having the same code with other stations which are not desired for storage on the program channel table, the user is left with nothing, except blocking the storage of all stations with said code, or leaving all such stations freely accessed, preventing the storage of a single preferred station with the same code of the others of which their storage is not wanted.

Another method used with the same purpose in the prior art is "channel storage according to user preference". In this method, the user enters the info into the program channel table of those broadcasting stations which are preferred.

In the general use of this method, the user selects the broadcast content info which is wanted for storing onto the program channel table. For instance, if the user wants only news and sports channels to be stored on the program channel table, he/she selects the relevant broadcast content info. While the electronic device implementing this method performs a scan in the relevant frequency spectrum, it searches the user-selected broadcast content info in the detected broadcasting signals. If the broadcast station in the detected broadcasting signal is in compliance with the user preference, this broadcasting station is stored onto the program channel table.

Since this method carries out a general evaluation on the broadcasting stations, it does not solve the problems in the methods indicated above, but it replicates it.

Said methods are based on transmitting a code -providing data on the general broadcast content (sports, news, music, etc.) of such broadcasting stations- within the broadcast, but in practice, the broadcasting stations particularly in the Europe do not transmit this code. Therefore the methods referred to hereinabove become inapplicable.

Two basic procedures may be conducted in television and/or radio broadcasting signal receivers by making use of the methods indicated above as well. These are the refreshing of the program channel table and the updating of the program channel table.

The refreshing procedure of the program channel table is based on resetting the current program channel table, so that the broadcasting stations available in the relevant frequency interval are regenerated by taking into account certain criteria, if present.

In the updating of the program channel table, on the other hand, the data available on the present program channel table are not deleted, but newly-detected channels in the relevant frequency range are stored onto the program channel table, and the information of stations with new and/or altered frequencies are updated.

Document KR 20070013702 proposes a method of preventing the storage of undesired channels.

The problems encountered in the methods of the prior art are seen in both procedures and avoid the complete implementation of the user preferences on the program channel table.

The method according to the present invention, however, solves the problems referred to hereinabove in relation to the prior art. Thanks to the method according to the present invention, each broadcasting station is evaluated individually so that the user preferences are fulfilled completely. It becomes also possible with the method according to the present invention to store any new channel detected while the relevant frequency spectrum is scanned as the program channel table is updated or to update the broadcast information of the stations present on the existing program channel table in an automatic manner, providing the users with simplicity and easiness. In addition, if an unwanted channel table defining any such unwanted broadcasting stations is provided from an external source, the procedure to be conducted by the user in compliance with his/her preference is minimized.

### Objective of Invention

The objective of the method according to the present invention is to prevent the storage on the program channel table of those broadcasting stations, which are available in the television and/or radio broadcast frequency spectrum and are detected by the electronic device as the frequency spectrum is scanned, but are not wanted by the user, by making use of characteristic data inherent to each broadcasting station.

The scope of the invention is defined by the claims.

### Description of Figures

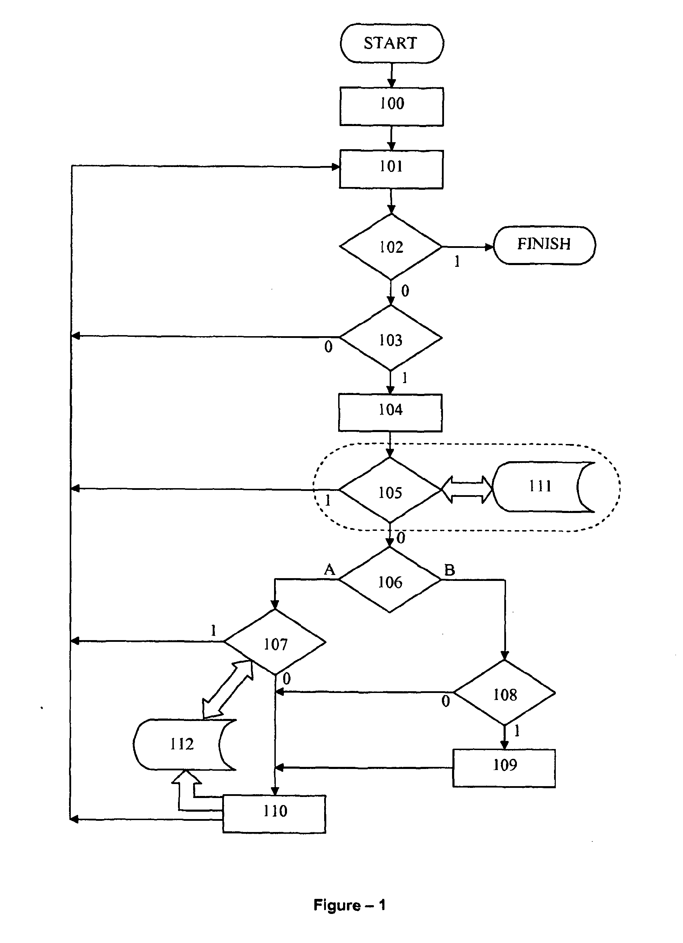

Figure 1 is a block diagram illustrating an exemplary algorithm by which the method according to the present invention is realized.

The terms in the figure are briefly described as following:
1 - The state in which the decision block gives a positive result
0 - The state in which the decision block gives a negative result
A - The attempt of user to update the program channel table
B - The attempt of user to refresh the program channel table

### Description of Invention

The present invention provides the opportunity of selecting the broadcast signals to be stored on the program channel table based on user preferences in an automatic frequency scanning and programming procedure to be conducted on the program channel table of an electronic device by which the method according to the present invention is applied by defining the user's station-based preferences for the broadcasting stations available in the television and/or radio frequency spectrum.

The method according to the present invention can be integrated into all methods already in use for storing the broadcast signals onto the program channel table. Any kind of receiver device in which such methods are used can be provided with the tables reflecting the user preferences in a complete manner.

Some examples in relation to the implementation of the method according to the present invention are disclosed as following in an illustrative, but not restrictive manner, keeping in mind that this method is applicable in creating any kind of program channel tables as indicated above.

The block diagram of an algorithm of implementing the subject method in an exemplary system is given in Figure 1.

This implementation has two basic functions, depending on the procedure the user wants to perform on the program channel table [112]. The user has two choices, one of them being the refreshing of the program channel table [A], and the other one being the updating of the program channel table [B]. These options can be defined either by the user, or by the system by which the method according to the present invention is implemented.

With the running of said algorithm, the system conducts parameter setup such as bringing a frequency value to the start of the relevant frequency range for starting first the automatic programming procedure [100]. The frequency value at the tuner is increased by a predetermined value place value [101]. It is checked whether the new frequency value is within the relevant frequency range [102]. If the new frequency value is within the relevant range, it is switched to the next step [103] and the frequency scanning procedure is continued.

If the new frequency value is out of the relevant frequency range, the automatic programming procedure is terminated. In this phase, the program channel table keeping those stored broadcasting stations may be displayed [112].

The system checks whether there is present any broadcast signal at the new frequency value [103]. If there is present a broadcast signal at such frequency, it is switched to step [104]. If no broadcast signal is detected at such frequency, the system switches back to step [101], the frequency value is increased, and the scanning of the relevant frequency range is continued.

Information is received on such detected broadcast signal (the signal is decoded if necessary), broadcasting station, and on the signal, so that broadcasting station detection is realized [104]. This information (code and/or setup information) is stored as temporary variables. Following this step, it is switched to the part in which the method according to the present invention is realized [105].

If any such detected broadcasting station is present in the "unwanted channels table" [111], the system jumps to step [101] and continues to scan the relevant frequency range. Thus, any broadcasting station identified, but not wanted by the user is not subjected to the procedure of storing on the program channel table [112] and is simply skipped.

In this step, the setup information of any unwanted broadcasting station detected in the relevant frequency spectrum is stored on the unwanted channels table [111] in order to provide simplicity and to quicken any future procedure against the fact that user preferences may vary in time. As obvious, the system may not conduct such a procedure either. Failing to store any detected and unwanted broadcasting station on the memory shall provide room in the system with respect to memory utilization.

If any detected and/or identified broadcasting station is not present in the "unwanted channels table" [111], the system switches to the next step [106]. In this step [106], the system checks the automatic programming procedure's use option. If this option is the updating of the present program channel table [A], it is switched to step [107], or if it is the refreshing or generating of a program channel table [B], it is switched to step [108].

If the present program channel table is to be updated [A], the system checks [107] whether any detected and/or identified broadcasting station is already present in the "program channel table" [112]. If such broadcasting station is not present in the "program channel table" [112], the system switches to the next step [110] and stores the setup information and/or code of such broadcasting station onto the program channel table [112]. Following the storage of such broadcasting station, the system jumps to step [101] to continue the scanning of the relevant frequency range.

If such station is already stored on the "program channel table" [112], the system jumps to step [101] to continue the frequency scanning operation.

As an alternative, the system also checks the setup information of such station at said step [107] and compares the information maintained as the temporary variable to the setup information of that broadcasting station available at the program channel table [112]. If these information do not match, it is determined that the setup information of that broadcasting station is changed [107] and the information maintained as the temporary variable is stored on the relevant memory area of the program channel table [112] so that the information of that station is updated [110].

If the program channel table is to be refreshed or updated [B], the system switches from step [106] to the decision step [107]. In this step [107], it is checked during the frequency scanning procedure of such detected and/or identified broadcasting station whether this station is the first detected broadcasting station/signal. If such broadcasting station/signal is the first of detected broadcasting stations/signals, the system switches to step [109] and the data in the present program channel table [112] are deleted. The system then switches to step [110], and stores the code and setup information of such broadcasting station onto the program channel table [112].

If such broadcasting station/signal is not the first of detected broadcasting stations/signals, the system switches to step [110] and continues the procedure.

The automatic programming procedure is finished once the system concludes that the scanning operation of the relevant frequency range is ended [102].

As an alternative to the procedures defined on the steps [108] and [109], if it is selected to refresh the program channel table [A], all data present on the channel table are deleted since a new program channel table is to be generated. If the program channel table is to be updated [B], no preliminary change is conducted on the present program channel table [112].

Many methods are used for the storing operation referred to in step [110]. The most widely-known methods among those are the Automatic Programming System, Automatic Tuning System, Automatic Tuning and Sorting System, in which any such identified broadcasting stations are saved to the respective program numbers by making use of a table that is previously stored on the memory. Another method is the Auto Search method, in which the broadcasting stations are saved to program numbers according to the order of such stations on the frequency spectrum.

Volatile memories (RAM) are used for speeding up said automatic programming procedure. In such type of use, the code and setup information of those broadcasting stations which are detected during the frequency-range scan are stored onto the volatile memory. The storing order of broadcasting stations may coincide with the order of the frequency of broadcasting stations/signals. An auxiliary table generated by the data-saving processes conducted on the volatile memory may be used for regulating the complex data reading/writing manner of nonvolatile memories during the automatic programming procedure, so that the number of memory access type switching can be reduced during said automatic programming procedure. Thus the system is speeded up.

In addition to the exemplary embodiment given above, the method according to the present invention can also be used in all known methods of generating program channel tables.

The unwanted channels table indicating the user preference, as well as the program channel table, which defines the relation between the electronic device's program keys or program memory areas with the broadcasting stations are maintained on a nonvolatile memory. Thereby, if such electronic device is turned off or any energy interruption occurs, the user preferences and the information of stored broadcasting stations are saved.

The codes of broadcasting stations used during their identification can also be used in many other methods, including the method according to the present invention. Thus, it becomes possible to reflect the preferences of users in relation to such broadcasting stations and/or to the setup info of such broadcasting stations.

The code of broadcasting stations referred to above is in use in general certain standards. The identification codes used in V.P.S. and DIDON ANTIOPE systems are examples of such code. On the other hand, any kind of identification codes, either embedded into the broadcast signal of such broadcasting station or open, can be used in the method according to the present invention. In this respect, even any datum included in the teletext data of a broadcast signal can be used as a code, which would be inherent to a broadcasting station, for this purpose.

One way of generating an unwanted channels table is based on the selections made by the user on the present program channel table. In this implementation, the user selects a broadcasting station present at the present program table to be stored onto the unwanted program table. In result, such broadcasting station is removed from the present program channel table to the unwanted channel table and the information in relation to such station is deleted.

The most applicable way in detecting/identifying a broadcasting station is based on identifying the inherent code included the broadcast signal of such broadcasting station. These codes are used in generating the unwanted channels table.

One problem encountered while the user determines unwanted broadcasting stations is that the broadcasting stations may not carry such inherent codes in their broadcast signals. The method according to the present invention solves this problem by making use of the setup information (e.g. broadcasting frequency) of such broadcasting stations, in place of using their codes.

Additionally, a further implementation providing the user with simplicity or ease of use is based on supplying such unwanted channel table externally in an original form, with no user intervention being made yet. The purpose here is to provide an unwanted channels table, which is not customized yet, but which may reflect general user preferences, before the user starts customizing the present channels table. This external source may both be a databank accessible via the Internet, or the manufacturer of the electronic device employed. Such raw unwanted channels table(s) may previously be loaded onto the electronic device's memory by the manufacturer.

The method according to the present invention provides also the possibility of transferring data from such unwanted channels table to the program channel table. Thereby, a broadcasting station determined to be as an unwanted channel by the user can be transferred to the program channel table. The preferences of user which may vary in time can be reflected to the program channel table maintained at the electronic device in a quick and simple manner, without requiring any new automatic programming procedure.

As pointed out above, the implementation field of the method according to the present invention is not restricted to the examples given above, but it can be used in many program channel table methods and is also open for developments/improvements.

## Claims

1. A method of storing the setup information of broadcasting stations on respective program numbers of the electronic device to a program channel table according to user preferences comprising the steps of : • receiving an unwanted channels table from an external source which can be a databank accessible via the Internet or the manufacturer of said electronic device
• altering said unwanted channels table based on selections made by the user on a present program channel table, by transferring a broadcasting station in the present program channel table to the unwanted channels table by the user and deleting such carried channel from the program channel table;
• storing information which is received on a broadcast signal and decoded for identifying the broadcasting station, wherein the information is inherent to a broadcasting station and the information is carried by the broadcast signal" wherein said information is a code that complies with V.P.S. or DIDON ANTIDOPE standard;
• preventing the storage of the broadcasting station onto the program channel table during the automatic programming procedure if the stored information is present in the unwanted channels table.

2. A method according to Claim 1, **characterized in that** said automatic programming procedure comprises the steps of
• scanning the relevant frequency range for detecting the existing broadcast signals,
• if such a broadcast signal is detected, identifying such broadcasting station at that frequency by making use of the information included in the broadcast signal,
• identifying the information to be stored on the memory in relation to such detected broadcasting station,
• storing the setup information of such identified broadcasting station on the relevant program number in accordance with the detected storage information,
• generating the program channel table by means of storing the setup information of broadcasting stations detected in said frequency range on the relevant program numbers,
• storing said program channel table onto a nonvolatile memory,
• providing the possibility of changing said program channel table by the user.

3. A method according to claims 1 and 2, **characterized in that** said automatic programming procedure comprises the steps of
• storing the setup information of such detected broadcasting stations on a cache memory,
• storing unidentified broadcasting stations onto the program channel table according to a predetermined algorithm.

4. A method according to Claim 2, **characterized in that** the storage information of said broadcasting stations are stored on a predetermined list or table.

5. A method according to Claim 4, **characterized in that** said predetermined list or table is prepared by the manufacturer of the relevant electronic device.

6. A method according to claims 4 and 5, **characterized in that** said predetermined list or table can be changed by the user.

7. A method according to Claim 3, **characterized in that** said cache memory is a volatile memory.

8. A method according to Claim 2, **characterized in that** said storage information includes the program number information on which an identified broadcasting station is to be stored.

9. A method according to Claim 2, **characterized in that** said storage information includes preferential storage information of such identified broadcasting station.

10. A method according to claims 2 to 9, **characterized in that** said storage information includes information for calculating or generating the program number information onto which such identified broadcasting station is to be stored.

11. A method according to Claim 1, **characterized in that** the automatic programming procedure includes the step of storing all such detected broadcasting stations onto the relevant program numbers according to the frequency order of such detected broadcasting stations.

12. A method according to Claim 1, **characterized in that** the present program channel table is generated as a result of a previously-conducted automatic programming procedure.

13. A method according to Claim 1, **characterized in that** an alert is generated requiring the user to approve the storage of the information of a broadcasting station onto the unwanted channels table following the transfer of the broadcasting station.

14. A method according to Claim 1, **characterized in that** said unwanted channels table is maintained on a volatile memory.

15. A method according to claims 1, 13, and 14, **characterized in that** said unwanted channel table is displayable and alterable by the user.

16. A method according to claims 1, 13 to 15, **characterized in that** the users using said electronic device can generate different unwanted channels tables.

17. A method according to claims 1, 2, 3 and 11, **characterized in that** the setup information of an unwanted, but also unidentified broadcasting station due to the lack of the information in the broadcast signal is stored on the unwanted channels table.

18. A method according to Claim 17, **characterized in that** the setup information of unwanted, but unidentified broadcasting stations in the unwanted channels table are used for preventing the storage of unwanted but unidentified broadcasting stations on the program channel table.

19. A method according to claims 1, 13 to 18, **characterized in that** said unwanted channels table can be selected by the user among unwanted channels tables previously stored by the manufacturer of said electronic device.

20. A method according to claims 1, 2, 3, and 11, **characterized in that** the relevant frequency range is scanned for updating the present program channel table in order to detect new broadcast stations and/or those stations with their frequency changed in the relevant frequency range and to store on the relevant program numbers the setup information of those new and/or re-detected broadcasting stations.

21. A method according to claims 1, 2, 3, 11 and 12 , **characterized in that** the information present in the unwanted channel table is transferred to the program channel table and **in that** the broadcasting stations stored and/or defined on the unwanted channels table are transferred to the program channel table without requiring to run the automatic programming procedure.

22. A method according to claims 1, 2, 13, 17, , **characterized in that** said information is included in the broadcasting frequency of the broadcasting station or in an auxiliary signal or info carried with the broadcasting signal of the broadcasting station.

## Patentansprüche

1. Verfahren zum Speichern der Einstellungsinformation von Sendestationen auf entsprechenden Programmnummern der elektronischen Vorrichtung in eine Programmkanaltabelle gemäß Benutzerpräferenzen, die Schritte aufweisend:
- Empfangen einer Tabelle mit unerwünschten Kanälen von einer externen Quelle, welche eine Datenbank, zugänglich über das Internet, sein kann oder
der Hersteller der elektronischen Vorrichtung;
- Abändern der Tabelle mit unerwünschten Kanälen basierend auf Auswahlen des Benutzers, durchgeführt in einer aktuellen Programmkanaltabelle, durch Übertragen einer Sendestation in der aktuellen Programmkanaltabelle auf die Tabelle mit unerwünschten Kanälen durch den Benutzer und Löschen des derartig übertragenen Kanals von der Programmkanaltabelle;
- Speichern von Information, welche auf einem Sendesignal empfangen wird und entschlüsselt wird, um die Sendestation zu identifizieren, wobei die Information inhärent zu einer Sendestation gehört und die Information über das Sendesignal übertragen wird, wobei die Information ein Code ist, der mit dem V.P.S. oder DIDON ANTIDOPE Standard übereinstimmt;
- Verhindern des Speicherns der Sendestation in die Programmkanaltabelle während des automatischen Programmierungsverfahrens, falls die gespeicherte Information in der Tabelle mit unerwünschten Kanälen vorhanden ist.

2. Verfahren nach Anspruch 1, **dadurch gekennzeichnet, dass** das automatische Programmierungsverfahren die Schritte aufweist
- Scannen des relevanten Frequenzbereichs, um die existierenden Sendesignale zu erfassen;
- wenn ein solches Sendesignal erfasst wird, Identifizieren der Sendestation auf dieser Frequenz durch Nutzung der im Sendesignal enthaltenen Information;
- Identifizieren der im Speicher zu speichernden Information in Relation zu der so identifizierten Sendestation;
- Speichern der Einstellungsinformation der so identifizierten Sendestation auf der zugehörigen Programmnummer in Übereinstimmung mit der erfassten Speicherinformation;
- Generieren der Programmkanaltabelle durch Speichern der Einstellungsinformation der Sendestationen, welche im Frequenzbereich erfasst wurde, auf den zugehörigen Programmnummern;
- Speichern der Programmkanaltabelle auf einem nicht-flüchtigen Speicher;
- Anbieten der Möglichkeit des Abänderns der Programmkanaltabelle durch den Benutzer.

3. Verfahren nach den Ansprüchen 1 und 2, **dadurch gekennzeichnet, dass** das automatische Programmierungsverfahren die Schritte aufweist
- Speichern der Einstellungsinformation der erfassten Sendestationen auf einem Cache-Speicher;
- Speichern unidentifizierter Sendestationen auf die Programmkanaltabelle nach einem festgelegten Algorithmus.

4. Verfahren nach Anspruch 2, **dadurch gekennzeichnet, dass** die Speicherinformation der Sendestationen in einer festgelegten Liste oder Tabelle gespeichert wird.

5. Verfahren nach Anspruch 4, **dadurch gekennzeichnet, dass** die festgelegte Liste oder Tabelle vom Hersteller der zugehörigen elektronischen Vorrichtung vorbereitet wird.

6. Verfahren nach den Ansprüchen 4 und 5, **dadurch gekennzeichnet, dass** die festgelegte Liste oder Tabelle durch den Benutzer geändert werden kann.

7. Verfahren nach Anspruch 3, **dadurch gekennzeichnet, dass** der Cache-Speicher ein flüchtiger Speicher ist.

8. Verfahren nach Anspruch 2, **dadurch gekennzeichnet, dass** die Speicherinformation die Information zur Programmnummer enthält, auf welcher eine identifizierte Sendestation gespeichert werden soll.

9. Verfahren nach Anspruch 2, **dadurch gekennzeichnet, dass** die Speicherinformation eine Vorzugsspeicherinformation einer identifizierten Sendestation enthält.

10. Verfahren nach den Ansprüchen 2 bis 9, **dadurch gekennzeichnet, dass** die Speicherinformation eine Information enthält, um die Programmnummerninformation zu berechnen oder zu generieren, wohin die identifizierte Sendestation gespeichert werden soll.

11. Verfahren nach Anspruch 1, **dadurch gekennzeichnet, dass** das automatische Programmierungsverfahren den Schritt beinhaltet, alle so erfassten Sendestationen gemäß der Frequenzreihenfolge der erfassten Sendestationen auf den zugehörigen Programmnummern zu speichern.

12. Verfahren nach Anspruch 1, **dadurch gekennzeichnet, dass** die vorhandene Programmkanaltabelle generiert wird als Ergebnis eines vorher ausgeführten automatischen Programmierungsverfahrens.

13. Verfahren nach Anspruch 1, **dadurch gekennzeichnet, dass** ein Alarm generiert wird, der vom Benutzer verlangt, das Speichern der Information einer Sendestation auf die Tabelle mit unerwünschten Kanälen nach dem Übertragen der Sendestation zu bestätigen.

14. Verfahren nach Anspruch 1, **dadurch gekennzeichnet, dass** die Tabelle mit unerwünschten Kanälen auf einem flüchtigen Speicher verwaltet wird.

15. Verfahren nach den Ansprüchen 1, 13 und 14, **dadurch gekennzeichnet, dass** die Tabelle mit unerwünschten Kanälen durch den Benutzer darstellbar und abänderbar ist.

16. Verfahren nach den Ansprüchen 1, 13 bis 15, **dadurch gekennzeichnet, dass** die Benutzer, welche die elektronische Vorrichtung nutzen, verschiedene Tabellen mit unerwünschten Kanälen generieren können.

17. Verfahren nach den Ansprüchen 1, 2, 3 und 11, **dadurch gekennzeichnet, dass** die Einstellungsinformation einer unerwünschten, aber auch unidentifizierten Sendestation aufgrund des Fehlens von Information im Sendesignal auf die Tabelle mit unerwünschten Kanälen gespeichert werden.

18. Verfahren nach Anspruch 17, **dadurch gekennzeichnet, dass** die Einstellungsinformation von unerwünschten, aber auch unidentifizierten Sendestationen in der Tabelle der unerwünschten Kanäle genutzt werden, um das Speichern von unerwünschten, aber unidentifizierten Sendestationen auf der Programmkanaltabelle zu verhindern.

19. Verfahren nach den Ansprüchen 1, 13 bis 18, **dadurch gekennzeichnet, dass** die Tabelle mit unerwünschten Kanälen vom Benutzer ausgewählt werden kann unter vorher vom Hersteller der elektronischen Vorrichtung abgespeicherten Tabellen mit unerwünschten Kanälen.

20. Verfahren nach den Ansprüchen 1, 2, 3 und 11, **dadurch gekennzeichnet, dass** der zugehörige Frequenzbereich zur Aktualisierung der vorhandenen Programmkanaltabelle gescannt wird, um neue Sendestationen zu erfassen und/oder jene Stationen, die ihre Frequenz im zugehörigen Frequenzbereich geändert haben und um die Einstellungsinformation dieser neuen und/oder neu-erfassten Sendestationen auf den zugehörigen Programmnummern zu speichern.

21. Verfahren nach den Ansprüchen 1, 2, 3, 11 und 12, **dadurch gekennzeichnet, dass** die in der Tabelle der unerwünschten Kanäle vorhandene Information in die Programmkanaltabelle übertragen wird und dadurch, dass die Sendestationen, gespeichert und/oder definiert in der Tabelle der unerwünschten Kanäle, auf die Programmkanaltabelle übertragen werden ohne das automatische Programmierungsverfahren auszuführen.

22. Verfahren nach den Ansprüchen 1, 2, 13, 17, **dadurch gekennzeichnet, dass** die Information in der Sendefrequenz der Sendestation enthalten ist oder in einem Hilfssignal oder einer Information, übertragen mit dem Sendesignal der Sendestation.

## Revendications

1. Procédé de stockage d'informations d'installation de stations de radiodiffusion sur des numéros de programme respectifs du dispositif électronique dans une table de chaînes de programme selon des préférences utilisateur, comprenant les étapes consistant à :
- recevoir une table de chaînes non souhaitées provenant d'une source externe qui peut être une banque de données accessible via Internet ou le fabricant dudit dispositif électronique ;
- modifier ladite table de chaînes non souhaitées en se basant sur les sélections réalisées par l'utilisateur sur une table de chaînes de programme actuelle, en transférant une station de radiodiffusion dans la table de chaînes de programme actuelle à la table de chaînes non souhaitées par l'utilisateur et en supprimant une telle chaîne portée de la table de chaînes de programme ;
- stocker les informations qui sont reçues sur un signal de radiodiffusion et décodées pour identifier la station de radiodiffusion, dans lequel les informations sont inhérentes à une station de radiodiffusion et les informations sont portées par le signal de radiodiffusion, dans lequel lesdites informations sont un code qui est conforme à la norme V.P.S. ou DIDON ANTIDOPE ;
- empêcher le stockage de la station de radiodiffusion sur la table de chaînes de programme pendant la procédure de programmation automatique si les informations stockées sont présentes dans la table de chaînes non souhaitées.

2. Procédé selon la revendication 1, **caractérisé en ce que** ladite procédure de programmation automatique comprend les étapes consistant à
- balayer la plage de fréquences concernée pour détecter les signaux de radiodiffusion existants,
- si un tel signal de radiodiffusion est détecté, identifier une telle station de radiodiffusion à cette fréquence en se servant des informations incluses dans le signal de radiodiffusion,
- identifier les informations à stocker sur la mémoire par rapport à une telle station de radiodiffusion détectée,
- stocker les informations d'installation d'une telle station de radiodiffusion identifiée sur le numéro de programme concerné en conformité avec les informations de stockage détectées,
- générer la table de chaînes de programme au moyen du stockage des informations d'installation des stations de radiodiffusion détectées dans ladite plage de fréquences sur les numéros de programme concernés,
- stocker ladite table de chaînes de programme sur une mémoire non volatile,
- fournir la possibilité de changer ladite table de chaînes de programme par l'utilisateur.

3. Procédé selon les revendications 1 et 2, **caractérisé en ce que** ladite procédure de programmation automatique comprend les étapes consistant à
- stocker les informations d'installation de ces stations de radiodiffusion détectées sur une mémoire cache,
- stocker des stations de radiodiffusion non identifiées sur la table de chaînes de programme selon un algorithme prédéterminé.

4. Procédé selon la revendication 2, **caractérisé en ce que** les informations de stockage desdites stations de radiodiffusion sont stockées sur une liste ou table prédéterminée.

5. Procédé selon la revendication 4, **caractérisé en ce que** ladite liste ou table prédéterminée est préparée par le fabricant du dispositif électronique concerné.

6. Procédé selon les revendications 4 et 5, **caractérisé en ce que** ladite liste ou table prédéterminée peut être changée par l'utilisateur.

7. Procédé selon la revendication 3, **caractérisé en ce que** ladite mémoire cache est une mémoire volatile.

8. Procédé selon la revendication 2, **caractérisé en ce que** lesdites informations de stockage comprennent des informations de numéro de programme sur lesquelles une station de radiodiffusion identifiée doit être stockée.

9. Procédé selon la revendication 2, **caractérisé en ce que** lesdites informations de stockage comprennent des informations de stockage préférentielles d'une telle station de radiodiffusion identifiée.

10. Procédé selon les revendications 2 à 9, **caractérisé en ce que** lesdites informations de stockage comprennent des informations pour calculer ou générer les informations de numéro de programme sur lesquelles une telle station de radiodiffusion identifiée doit être stockée.

11. Procédé selon la revendication 1, **caractérisé en ce que** la procédure de programmation automatique comprend l'étape de stockage de toutes ces stations de radiodiffusion détectées sur les numéros de programme concernés selon l'ordre de fréquence de ces stations de radiodiffusion détectées.

12. Procédé selon la revendication 1, **caractérisé en ce que** la table de chaînes de programme actuelle est générée en raison d'une procédure de programmation automatique effectuée précédemment.

13. Procédé selon la revendication 1, **caractérisé en ce qu'**une alerte est générée, demandant à l'utilisateur d'approuver le stockage des informations d'une station de radiodiffusion sur la table de chaînes non souhaitées suite au transfert de la station de radiodiffusion.

14. Procédé selon la revendication 1, **caractérisé en ce que** ladite table de chaînes non souhaitées est maintenue sur une mémoire volatile.

15. Procédé selon les revendications 1, 13 et 14, **caractérisé en ce que** ladite table de chaîne non souhaitée est affichable et modifiable par l'utilisateur.

16. Procédé selon les revendications 1, 13 à 15, **caractérisé en ce que** les utilisateurs utilisant ledit dispositif électronique peuvent générer différentes tables de chaînes non souhaitées.

17. Procédé selon les revendications 1, 2, 3 et 11, **caractérisé en ce que** les informations d'installation d'une station de radiodiffusion non souhaitée mais également non identifiée en raison du manque d'informations dans le signal de radiodiffusion sont stockées sur la table de chaînes non souhaitées.

18. Procédé selon la revendication 17, **caractérisé en ce que** les informations d'installation des stations de radiodiffusion non souhaitées mais non identifiées dans la table de chaînes non souhaitées sont utilisées pour empêcher le stockage de stations de radiodiffusion non souhaitées mais non identifiées sur la table de chaînes de programme.

19. Procédé selon les revendications 1, 13 à 18, **caractérisé en ce que** ladite table de chaînes non souhaitées peut être sélectionnée par l'utilisateur parmi des tables de chaînes non souhaitées stockées précédemment par le fabricant dudit dispositif électronique.

20. Procédé selon les revendications 1, 2, 3 et 11, **caractérisé en ce que** la plage de fréquences concernée est balayée pour mettre à jour la table de chaînes de programme actuelle afin de détecter de nouvelles stations de radiodiffusion et/ou les stations dont la fréquence a changé dans la plage de fréquences concernée et afin de stocker sur les numéros de programme concernés les informations d'installation de ces stations de radiodiffusion nouvelles et/ou redétectées.

21. Procédé selon les revendications 1, 2, 3, 11 et 12, **caractérisé en ce que** les informations présentes dans la table de chaînes non souhaitées sont transférées à la table de chaînes de programme et **en ce que** les stations de radiodiffusion stockées et/ou définies sur la table de chaînes non souhaitées sont transférées à la table de chaînes de programme sans réclamer d'exécuter la procédure de programmation automatique.

22. Procédé selon les revendications 1, 2, 13, 17, **caractérisé en ce que** lesdites informations sont comprises dans la fréquence de radiodiffusion de la station de radiodiffusion ou dans un signal ou des informations auxiliaire(s) porté(es) avec le signal de radiodiffusion de la station de radiodiffusion.
